# EUROPEAN PATENT APPLICATION

(11) **EP 4 653 294 A1**
(43) Date of publication of application: **26.11.2025**
(21) Application number: 24176967.8
(22) Date of filing: 21.05.2024
(51) Int. Cl.: B62D 23/00, B62D 27/02, B62D 33/06, F16B 11/00

(54) **LARGE FRAME STRUCTURE**

(71) Applicant: Sika Technology AG, 6340 Baar (CH)
(72) Inventor: GUTGSELL, Michael, 8610 Uster (CH); ZIVALJIC, Marko, 8854 Siebnen (CH)
(74) Representative: Sika Patent Attorneys

(57) **Abstract**

The invention relates to a frame structure comprising a node connector for connecting tubes and a tube designed to be connected to the node connector can provide an easy and secure connection if the node connector is a one-piece part with a main body and at least one protrusion. An inner cross-section of an end portion the tube is at least a wide as the outer cross-section of the protrusion. This enables a proper fit of the tube onto the protrusion of the tube. The end portion of the tube is designed to fit over the protrusion to connect the tube to the connector. The protrusion of the node connector comprises a recess for an adhesive. The recess is arranged on the outer circumference of the protrusion and extends essentially over/via the entire circumference.

## Description

### Technical field

The invention relates to frame structure and a method to manufacture a frame structure.

Large frame structures as for example for a work vehicle as a tractor, a lorry or a truck. Those large work vehicles cannot be manufactures in the same production lines as smaller vehicles as for example standard heating furnaces are too small to fit a large frame structure.

Assembling metal tubes to a frame structure typically involves joining two or more tubes together using a variety of techniques, such as welding, brazing, or mechanical fastening. The specific method used depends on the application and the type of metal being used. One common method for assembling metal tubes is welding. This involves melting the edges of the tubes together to create a strong bond. Welding can be done using various techniques, such as TIG (tungsten inert gas) welding, MIG (metal inert gas) welding, or stick welding. The process can be done manually or using automated machinery. One challenge with welding is ensuring that the welds are strong and consistent throughout the assembly, as weak or uneven welds can compromise the structural integrity of the finished product. Another method for joining metal tubes is brazing. This involves heating the metal tubes and adding a filler metal that melts at a lower temperature than the base metal. The filler metal then flows into the joint and solidifies, creating a strong bond between the two tubes. Brazing can be done using a torch or a furnace and is often used for joining dissimilar metals that cannot be welded together. One challenge with brazing is achieving the proper temperature and timing to ensure that the filler metal flows evenly and creates a strong bond. Mechanical fastening is another option for assembling metal tubes. This involves using screws, bolts, or other types of connectors to join the tubes together. Mechanical fastening is often used for temporary assemblies or for parts that need to be disassembled for maintenance or repair. One challenge with mechanical fastening is ensuring that the fasteners are tightened to the correct torque specification, as over- or under-tightened fasteners can lead to failure of the assembly. Overall, the challenges around assembling metal tubes depend on the specific method used and the application of the finished product. However, common challenges include achieving consistent quality throughout the assembly, ensuring proper temperature control and timing for welding and brazing, and ensuring proper torque specification for mechanical fastening.

### Summary of the invention

It is therefore an object of the present invention to provide a frame structure that is can be easily manufactured, and the corresponding manufacturing method.

It was surprisingly found that a frame structure comprising a comprising a first element for connecting a second element and a second element designed to be connected to the first element. The first element comprises at least one protrusion. An inner cross-section of an end portion the second element is at least a wide as the outer cross-section of the protrusion of the first element. The end portion of the second element is designed to fit over the protrusion first element to connect the second element to the first element. The protrusion of the first element comprises a recess for an adhesive. The recess is arranged on the outer circumference of the protrusion of the first element and extends essentially over the entire circumference.

In an embodiment, the frame structure the first element is a node connector and the second element is a tube designed to be connected to the node connector. The frame structure comprising a node connector for connecting tubes and a tube designed to be connected to the node connector can provide an easy and secure connection if the node connector is a one-piece part with a main body and at least one protrusion. An inner cross-section of an end portion the tube is at least a wide as the outer cross-section of the protrusion. This enables a proper fit of the tube onto the protrusion of the tube. The end portion of the tube is designed to fit over the protrusion to connect the tube to the node connector. The protrusion of the node connector comprises a recess for an adhesive. The recess is arranged on the outer circumference of the protrusion and extends essentially over/via the entire circumference.

In an embodiment, the one-piece node connector is also called single-piece node connector. The node connector can be cast as one piece.

In an embodiment, the main body of the node connector creates a structural connection between multiple protrusions or to a structure of a vehicle, in particular of a vehicle cabin. The main body can provide installation space for possible functional integration.

The recess can be designed as a slot, cavity, notch, groove gap, pocket and/or channel. The channel like recess makes it possible that the adhesive can be distributed through the recess. In contrast thereto US 2016/325796 discloses a rough surface without any recess.

In this text the phrase "the inner cross-section of an end portion the second element, in particular the tube, is at least a wide as the outer cross-section of the protrusion" means the inner cross section of the second element fits into the outer cross section of the first element.

Further aspects of the invention are the subject of further independent claims. Particularly preferred embodiments of the invention are the subject of the dependent claims. The features of the frame structure, the method to manufacture the same and the vehicle and the corresponding use of it can be combined with each other without limitation.

In an embodiment, the adhesive has a cleavage resistance of at least 20 N/mm, in particular at least 30 N/mm. The cleavage resistance is measured according to ISO 11343 (as from February 2024). Due to the resistance of the adhesive in the wedge-peal impact test the frame structure can provide a crash resistance for the passenger in the frame structure, as frame structure adheres together even on impact.

In an embodiment the circumferential recess is a continuous recess. This means that the recess is designed as an end-to-end recess. In other words, the recess extends around the protrusion e.g. in a circular manner. In an embodiment, the recess is non-helical but closed circumferentially (closed all-around; German: geschlossen umlaufend).

In an embodiment, the second element, in particular the tube, comprises an injection opening. The injection opening is aligned with the recess in a connected state of the first element, in particular the node connector and the second element, in particular the tube.

The connected state means that the tube is arranged onto/at the protrusion of the first element, in particular the node connector. The term aligned in this context means that the injection opening is arranged such, that an adhesive injected through the injection opening is injected into the recess.

In an embodiment, the tube comprises a ventilation opening. The ventilation opening is in fluid communication with the injection opening via the recess in the connected state before an adhesive is injected. Upon injection air can be pressed out of the ventilation opening. The ventilation opening can reduce the pressure upon injection. The ventilation opening can be arranged at the end of a flow path of the adhesive.

In an embodiment, the tube can comprise several injection openings. The arrangement of the injection openings depends on the distribution pattern of the adhesive.

In an embodiment, the protrusion and/or the main body of the node connector is designed as a hollow structure. This allows to safe weight and material on the node connector, which makes the node connector and therefore the frame structure more sustainable. Another advantage of the hollow node connector is that an electric cable can be feed through the node connector and part of the frame structure.

In an embodiment, the protrusion comprises a positioning element, which is designed to position the end portion of the tube onto the recess. This enables a secure placement of the tube at the node connector. Furthermore, the positioning element can enable to define a spacing/distance between the recess, in particular the surface of the recess, and an inner surface of the end portion of the tube. The positioning element can be designed to force the center of the tube and the center of an adjoining protrusion of the node connector to be co-axial.

In an embodiment the positioning element is arranged outside the recess. In an embodiment the positioning element may provide a gap between the protrusion, in particular the recess, of the node connector and an inner surface of tube, in particular of the end portion of the tube, so the adhesive may easily and/or evenly be applied between the bottom of the recess (also called flume base or recess bottom) and the tube.

In an embodiment, the recess provides a single adhesive joint. The adhesive joint can also be called joining surface, adherend surface and/or bonding surface (German: Fügefläche). In other words: the recess extends over the adhesive joint. The recess providing an adhesive joint means, that the surface area of the recess can substantially corresponds to the adhesive joint. This adhesive joint enables to fix the tube to the node connector. The fixation is caused by an adhesive introduced into the recess and contacting the inner surface of the end portion of the tube and the node connector, in particular the recess at the protrusion at the adhesive joint.

In an embodiment, the protrusion comprises multiple adhesive joints.

In an embodiment, the adhesive j oint is positioned at the protrusion but not at the recess.

In an embodiment, the adhesive joint has a surface of at least 5000 mm², in particular 5000-9000 mm², in particular at least 5300 mm², in particular 5300-7500 mm². These dimensions provide secure fixing of the node connector and the tube. In contrast to that the prior art as US 11286970 desires a much larger adhesive joint of at least 10000 mm2. In an embodiment with small tubes, the adhesive j oint has a surface of at least 2000 mm².

In an embodiment, the ratio of the inner circumference [mm] of the tube to the area of the adhesive joint [mm²] is at least 5 mm⁻¹, in particular at least 6 mm⁻¹, in particular at least 15 mm⁻¹, in particular at least 25 mm⁻¹. The ratio of the inner circumference [mm] of the tube to the area of the adhesive joint [mm²] can be 50 mm⁻¹, in particular at least 75 mm⁻¹, in particular at least 100 mm⁻¹, in particular at least 500 mm⁻¹, to the most depending on the geometry of the tube. Circular and squared tubes do have a lower the ratio of the inner circumference [mm] of the tube to the area of the adhesive joint [mm²] than rectangular tubes depending on the material.

In an embodiment, the frame structure sustains a Rolling Objects Protection Structure (ROPS) test and/or Falling Objects Protection Structure (FOPS) test. A ROPS (Rollover Protection Structure) is a structure - safety cab or frame, roll bars or roll cages - on the tractor to avoid or limit the risks of injuries in the event of a tractor overturn. The structure of the cabin is tested and validated according to ROPS test standards (e.g. ISO 27850) which are mandatory for tractor homologation. In other words, the frame structure can be designed as a Roll Over Protection Structure (ROPS) or a Falling Object Protection Structure (FOPS), or both.

The Rolling Objects Protection Structure (ROPS) test and/or Falling Objects Protection Structure (FOPS) test can be carried out according to test EN ISO 3471 (as of 2010) and/or a FOPS test according to EN ISO 3449 (as of 2009).

In an embodiment, the frame structure can be applied to an earth-moving machine and sustains the ROPS test according to EN ISO 3471 (as of 2010) and/or a FOPS test according to EN ISO 3449 (as of 2009). Other testing conditions can be applied to frame structure as well, as e.g. ISO 12117-2, EN 15059, ISO 10262, ISO 10262.

In an embodiment, the node connector comprises a different material than the tube. Such a material mix makes the pre-production of the node connector and the tube very flexible. The node connector and/or the tube can comprise at least one of the following materials: steel, aluminum, composite material, fiber-reinforced plastics, high-strength steel, stainless steel. The node connector and/or the tube can a pultruded part. The material might be lacquered or not lacquered. The frame structure might be lacquered after being assembled.

In an embodiment, the node connector comprises a first connection element and the tube comprises a second connection element, wherein the first connection element and the second connection element are designed to mechanically interlock. The mechanical interlocking is a safety measure designed to further improve the connection of the node connector with the tube providing a stable frame structure.

In an embodiment, the adhesive is a one-component or two-component adhesive. The adhesive can be epoxy-based or acrylate-based. In an embodiment, a suitable adhesive is marketed, for example, under the trade names SikaPower^{®} 1277.

In an embodiment, the application temperature of the adhesive is 15°C - reference portion 60°C. In an embodiment, the adhesive cures at room temperature.

A further aspect of the invention concerns a work vehicle comprising a cabin with a frame structure a described above. The frame structure provides a safe space for the passenger in the cabin for the vehicle. The work vehicle can be a earth-moving machine.

A further aspect of the invention is a method for manufacturing a frame structure, in particular a frame structure as described, the method comprising the steps of:
- providing a node connector for connecting tubes; and
- providing a tube designed to be connected to the node connector;
- providing an adhesive;
- arranging the tube onto the protrusion of the node connector;
- aligning the injection opening is aligned with the recess;
- injecting the adhesive though the injection opening into the recess;
- cure the adhesive.
wherein an inner cross-section of an end portion the tube is at least a wide as the outer cross-section of the protrusion. The end portion of the tube is designed to fit over the protrusion to connect the tube to the connector. The protrusion of the node connector comprises a recess for an adhesive. The recess is arranged on the outer circumference of the protrusion and extends essentially over the entire circumference. The tube comprises an injection opening und the injection opening is aligned with the recess in a connected state of node connector and tube. This enables a simple manufacturing of a stable frame structure.

In an embodiment, the adhesive is a one component adhesive and is cured at elevated temperature in an oven and/or though induction.

"Room temperature" refers to a temperature of 23°C.

A further aspect of the invention is directed to the use of a frame structure as described above for a vehicle body.

Further advantageous implementations of the invention are evident from the exemplary embodiments.

Embodiments of the frame structure and the method and the use can be combined without any limitations.

### Brief description of drawings

The drawings used to explain the exemplary embodiments show:
- Fig. 1: an exploded view of a frame structure;
- Fig. 2: a side view of connected state of the frame structure;
- Fig.3: a close view of the node connector.

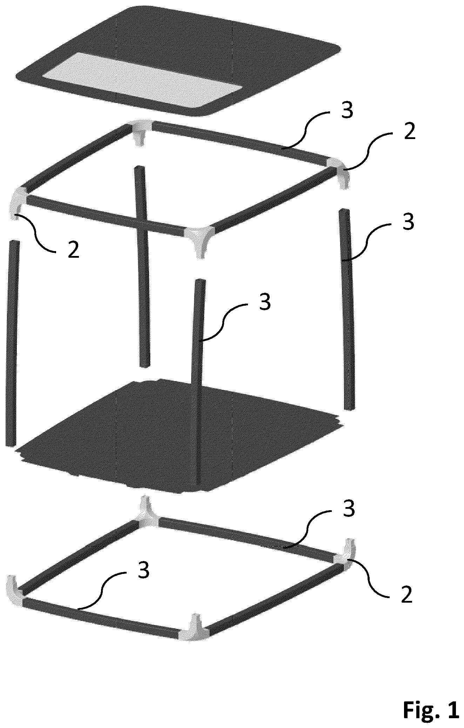

**Figure 1** shows a partial exploded view of a frame structure 1. At the top as well as the bottom part of the frame structure 1 is already in a connected state and span a trapezoid. The bottom part is to be connected to a flooring component and the top part is to be connected to a roof assembly. The bottom and top part are to be connected to by additional four essentially vertical tubes 3 via the node connectors 2.

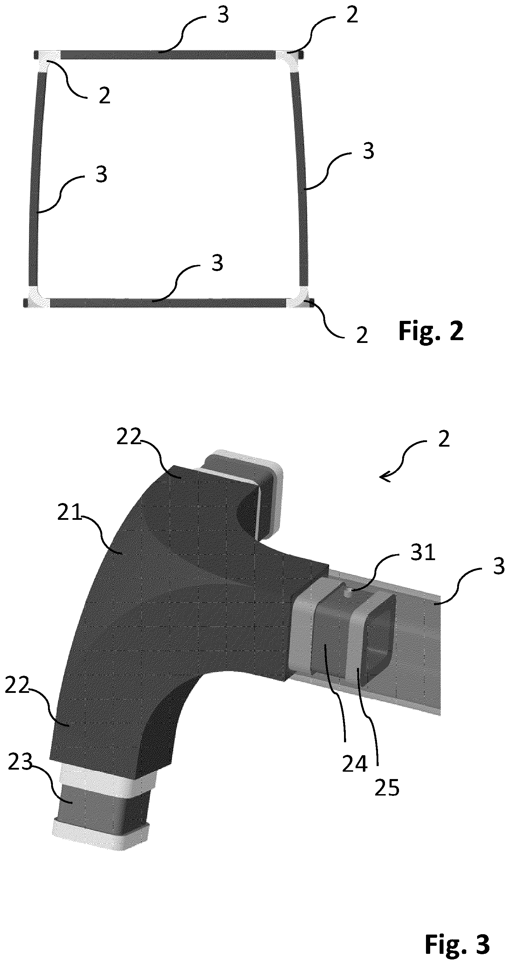

**Figure 2** show a side view of the frame structure 1. Four tubes 3 are connected to each other via four node connectors 2.

**Figure 3** shows a close view of the node connector 2 with a transparently illustrated tube 3 in the connected state. The tube 3 does not have to be transparent. The node connector 2 comprises a main body 21 and three protrusions 22. A tube 3 can be fitted onto the protrusion 22. An inner cross-section of an end portion the tube 3 is at least a wide as the outer cross-section of the protrusion 22. The end portion of the tube 3 is designed to fit over the protrusion 22 to connect the tube to the node connector 2. The protrusion 22 of the node connector 2 comprises a recess 23 for an adhesive 4. The recess 23 is arranged on the outer circumference of the protrusion 22 and extends essentially over/via the entire circumference. The tube 3 comprises a injection opening 31. The injection opening 31 is aligned with the recess 23 in a connected state of node connector and tube.

The connected state means that the tube 3 is arranged onto/at the protrusion 22 of the node connector. The term aligned in this context means that the injection opening 31 is arranged such, that an adhesive 4 injected through the injection opening 31 is injected into the recess 23.

The protrusion 22 further comprises a positioning element 25 to improve the positioning of the tube 3 onto the protrusion 22. Furthermore, the positioning element 25 can enable to define a spacing/distance between the recess 23, in particular the surface of the recess, and an inner surface of the end portion of the tube 3. The positioning element 25 can be designed to force the center of the tube 3 and the center of an adjoining protrusion 22 of the node connector to be co-axial.

## Claims

1. Frame structure comprising a first element for connecting a second element and
a second element designed to be connected to the first element;
wherein the first element comprises at least one protrusion;
wherein an inner cross-section of an end portion the second element is at least a wide as the outer cross-section of the protrusion of the first element;
wherein the end portion of the second element is designed to fit over the protrusion first element to connect the second element to the first element;
wherein the protrusion of the first element comprises a recess for an adhesive;
wherein the recess is arranged on the outer circumference of the protrusion of the first element and extends essentially over the entire circumference.

2. Frame structure according to claim 1, wherein the first element is a node connector and the second element is a tube designed to be connected to the node connector;
wherein the node connector is a one-piece part/device comprising a main body and the at least one protrusion;
wherein an inner cross-section of an end portion the tube is at least a wide as the outer cross-section of the protrusion;
wherein the end portion of the tube is designed to fit over the protrusion to connect the tube to the connector;
wherein the protrusion of the node connector comprises a recess for an adhesive;
wherein the recess is arranged on the outer circumference of the protrusion and extends essentially over the entire circumference.

3. Frame structure according to any of the claims, wherein the adhesive has a cleavage resistance of at least 20 N/mm, in particular at least 30 N/mm.

4. Frame structure according to any of the claims, wherein the circumferential recess is a continuous recess.

5. Frame structure according to any of the claims, wherein the second element, in particular the tube, comprises an injection opening,
wherein the injection opening is aligned with the recess in a connected state of the first element and the second element.

6. Frame structure according to any of the claims, wherein the protrusion and/or the main body of the first element is designed as a hollow structure.

7. Frame structure according to any of the claims, wherein the protrusion comprises a positioning element, which is designed to position the end portion of the second element, in particular the tube, onto the recess.

8. Frame structure according to any of the claims, wherein the recess provides a single adhesive joint.

9. Frame structure according to any of the claims, wherein the frame structure sustains a Rolling Objects Protection Structure (ROPS) test and/or Falling Objects Protection Structure (FOPS) test.

10. Frame structure according to any of the claims, wherein the first element, in particular the node connector, comprises a different material than the second element, in particular the tube.

11. Frame structure according to any of the claims, wherein the first element, in particular the node connector, comprises a first connection element and the second element, in particular the tube, comprises a second connection element, wherein the first connection element and the second connection element are designed to mechanically interlock.

12. Work vehicle comprising a cabin with a frame structure according to any one of claims 1-11.

13. A method for manufacturing a frame structure, in particular a frame structure according to any one of claims 1-12, the method comprising the steps of:
- providing a first element, in particular a node connector, for connecting tubes; and
wherein the first element, in particular the node connector, comprises at least one protrusion;
- providing a second element, in particular a tube, designed to be connected to the first element, in particular the node connector;
wherein an inner cross-section of an end portion the second element, in particular the tube, is at least a wide as the outer cross-section of the protrusion;
wherein the end portion of the tube is designed to fit over the protrusion to connect the second element, in particular the tube, to the first element, in particular the connector;
wherein the protrusion of the first element, in particular the node connector, comprises a recess for an adhesive;
wherein the recess is arranged on the outer circumference of the protrusion and extends essentially over the entire circumference;
wherein the second element, in particular the tube, comprises an injection opening,
wherein the injection opening is aligned with the recess in a connected state of the first element, in particular the node connector, and the second element, in particular the tube;
- providing an adhesive;
- arranging the second element, in particular the tube, onto the protrusion of the first element, in particular the node connector;
- aligning the injection opening is aligned with the recess;
- injecting the adhesive though the injection opening into the recess;
- cure the adhesive.

14. Method according to claim 13, wherein the adhesive cures at room temperature.

15. Method according to claim 13, wherein the adhesive is a one-component adhesive and is cured at elevated temperature in an oven and/or though induction.
